# EUROPEAN PATENT APPLICATION

(11) **EP 4 485 722 A1**
(43) Date of publication of application: **01.01.2025**
(21) Application number: 23182290.9
(22) Date of filing: 29.06.2023
(51) Int. Cl.: H02G 3/04, F16L 3/24

(54) **MODULAR CABLE RACK AND SUPPORT SYSTEM**

(71) Applicant: AB WIBE, 792 27 Mora (SE)
(72) Inventor: Campbell, Fraser, Kuala Lumpur (MY)
(74) Representative: Groth & Co. KB

(57) **Abstract**

Disclosed herein is a modular cable rack and support system comprising a C-shaped guide channel (2) and a U-shaped slidable fitting adapter (4, 4') comprising a mounting mechanism (26, 26'). The U-shaped slidable fitting adapter (4, 4') is designed to enter and slide in the C-shaped guide channel (2), the C-shaped guide channel (2) comprising an intermediate part (14) extending along a length of the C-shaped guide channel (2) and a pair of extensions (12) interconnected by the intermediate part (14), said pair of extensions (12) being arranged to extend in the same direction on longitudinal sides of the intermediate part (14). The pair of extensions (12) also extending along the length of the C-shaped guide channel (2), whereby the pair of extensions (12) each comprise a partially encompassing part (34) at their respective free ends. The U-shaped slidable fitting adapter (4, 4') comprises a pair of flange portions (18) and a bridge part (20, 20'), whereby the pair of flange portions (18) are arranged to extend in the same direction on two opposite sides of the bridge part (20, 20'). The partially encompassing parts (34) have an inner radius, which corresponds to an outer radius of corners between the pair of flange portions (18) and the bridge part (20, 20'), whereby the bridge part (20, 20') further comprises a pair of edges (28) arranged opposite one another so that the partially encompassing parts (34) abut the pair of edges (28) when the U-shaped slidable fitting adapter (4, 4') is positioned in the C-shaped guide channel (2).

## Description

### Technical Field

The invention relates to the field of cable rack and support systems in particular to highly versatile and reliable modular cable rack and support systems used for electric power installations in particular electric cables and small-bore tubing products.

### Background of the Invention

Typically cable rack systems are delivered in a prefabricated manner with holes for assembly drilled in the factory or at site. The assembly is then done on the installation site using screws or bolts or the like for fastening various components using the pre-drilled holes. In many cases cable rack systems comprise some sort of a guide channel, often a guide channel pair arranged parallel but at a distance to one another and a plurality of fitting adapters that can be connected to the guide channel at regular intervals, where the holes are drilled, for fixing cables to the fitting adapters. The fitting adapters may comprise cable clamps or cable clips or they may be designed to carry other sorts of mounting devices to mount and/or hold cables or tubing pipes. Often cable rack systems further comprise rung elements than can be fixed to the fitting adapters also at regular intervals. Traditionally the fitting adapters and guide channels or guide rails were not adapted for a strong form fit as they are screwed together on site using the screwtension to provide a fixed connection between guide channels and fitting adapters.

A disadvantage of pre-drilled holes in the factory is reduced flexibility. Further traditional systems using screws to connect and fix the fitting adapters to the guide channels do not provide a very strong connection, especially since the material that is typically used to produce the guide channels and the fitting adapters is rather thin and a rip out of screws or bolts or a bending of the material can occur. This can especially happen during a short circuit in high-voltage or high-power installations. Such short-circuits can be very violent and typically an affected cable wants to rise and rip during a short circuit. This must be avoided since such events lead to endangerment of personnel and other surrounding installations.

Examples of cable rack systems are illustrated in KR 101985475 B1, US 7090174 B2 and EP 3200298 B1. All of these examples show at least some of the above-mentioned disadvantages.

### Summary of the Invention

An object of the present invention is to provide a modular cable rack and support system that is versatile, flexible and safe.

In view of the above-mentioned problems the inventor of the present invention has discovered that it is possible to provide a modular cable rack and support system that is versatile and flexible and in which the intervals for mounting the cables to the modular cable rack and support system can be freely chosen on the installation site, by providing a C-shaped guide channel and a U-shaped slidable fitting adapter that can slide into the C-shaped guide channel from one of the two ends in a snug and therewith form fit manner by adapting corresponding dimensions and radii and by providing edges on an outer side of the U-shaped slidable fitting adapter, which edges engage the free ends of the C-shaped guide channel.

The cable rack and support system may also be called cable rack system or cable support system.

Disclosed herein is a modular cable rack and support system comprising a C-shaped guide channel and a U-shaped slidable fitting adapter comprising a mounting mechanism. The U-shaped slidable fitting adapter is designed to enter the C-shaped guide channel from one of the two front sides and slide in the C-shaped guide channel. The C-shaped guide channel comprises an intermediate part extending along a length of the C-shaped guide channel and a pair of extensions interconnected by the intermediate part and arranged to extend in the same direction on longitudinal sides of the intermediate part. The pair of extensions also extend along the length of the C-shaped guide channel and each comprise a partially encompassing part at their respective free ends. The U-shaped slidable fitting adapter comprises a pair of flange portions and a bridge part, whereby the pair of flange portions are arranged on two opposite sides of the bridge part and whereby the pair of flange portions extend in the same direction. The partially encompassing parts have an inner radius, which corresponds to an outer radius of corners between the pair of flange portions and the bridge part, whereby the bridge part further comprises a pair of edges arranged opposite one another on a side of the bridge part that is facing away from the pair of flange portions so that the partially encompassing parts abut the pair of edges when the U-shaped slidable fitting adapter is positioned in the C-shaped guide channel.

The advantage of the above-described modular cable rack and support system is that a very snug and strong form-fit can be achieved. At the same time a high flexibility may be provided, since the U-shaped slidable fitting adapter can slide in the C-shaped guide channel, which allows to freely choose any suitable position for the U-shaped slidable fitting adapter. This allows further to adapt the modular cable rack and support system exactly to the requirements of each application at site. Once everything is in place, including the electric installations, the U-shaped slidable fitting adapters may be fixed in their position on the C-shaped guide channel using screws or bolts.

The C-shaped guide channel is designed to at least partially hug the U-shaped slidable fitting adapter so that a very snug form fit connection is achieved.

In an embodiment the C-shaped guide channel is integrally formed and/or made of fibre-reinforced plastic.

In a further embodiment the U-shaped slidable fitting adapter is integrally formed and/or made of fibre-reinforced plastic.

The fibres or material may be carbon fibre, sheet moulding compound (SMC), glass fibre or the like and the plastic may be any suitable type of plastic for providing a strong matrix to the fibres.

In another embodiment the inner radius of the partially encompassing part(s) and the outer radius of corners between the pair of flange portions and the bridge part are in the range of R4 to R12, preferably R6 to R10 and more preferably R7 to R9.

Matching the inner radii of the C-shaped guide channel and the outer radii of the U-shaped slidable fitting adapter and thus of the corners between the pair of flange portions and the bridge part provides a snug fit between the C-shaped guide channel and U-shaped slidable fitting adapter.

In a further embodiment the mounting mechanism is arranged at the bridge part and wherein the mounting mechanism is any of a cut out, a magnet, a rotatable locking mechanism or a hole with a thread for receiving a screw. The mounting mechanism may in particular be designed as a magnet that interacts with a magnet from the cable holding part such as for example the cable clip.

The cut out may be used to fit rungs or rung elements of cable ladder systems, as disclosed herein.

The rotatable locking mechanism may also be used to fit rungs of cable ladder systems.

The hole with a thread may be used to connect various types of holding devices such as for example cable clamps or cable clips or tubing clamps.

In still another embodiment the modular cable rack and support system further comprises a rung element having a notch, whereby the mounting mechanism is a cut out arranged in the bridge part and whereby the rung element is designed to fit into the cut out and wherein the notch is designed to engage with a border of the cut out when the rung element is inserted into the cut out.

The cut out thus matches the cross sectional profile of the rung element.

The rung element may be part of a cable ladder comprising two C-shaped guide channels are arranged in parallel at a distance corresponding to a bit less than the length of the rung element and at least two U-shaped slidable fitting adapters arranged more or less at the same position. This allows to adapt the position of the rung element in a slidable manner and the notch enables an engagement between rung element and U-shaped slidable fitting adapters on both ends of the rung element.

In a further embodiment the modular cable rack and support system further comprises a sleeve capable of at least partially encompassing the rung element, whereby the sleeve comprises a wedge that is designed to be pushed in between at least a part of the cut out and the rung element for clamping and eventually locking the rung element in the cut out.

The wedge of the sleeve may result in that the notch of the rung element is pushed onto the rim or border of the cut out in order to press the notch into engagement with said border and thereby even more securely lock the rung element in the cut out.

In still a further embodiment the sleeve further comprises a flange and a groove, the groove being arranged between the wedge and the flange so that upon pushing the sleeve into the cut out with the wedge first, the groove engages the border of the cut out once the wedge is pushed all the way into the cut out. The flange may prevent the sleeve from entering deeper into the cut out once the groove engages the border of the cut out.

Using the flange and a groove on the sleeve, the rung element is safely locked in the cut out of the U-shaped slidable fitting adapter. The locking may be some sort of clamp fit.

The groove of the sleeve and the notch of the rung element may be arranged on opposite sides of one another.

The sleeve may be arranged on top of the rung element upon connection of the rung element to the cut out, while the notch of the rung element may be arranged on a lower side of the rung element.

In an embodiment the rung element is U-shaped and the cut out is formed correspondingly so that the rung element snuggly fits into the cut out.

The notch(es) of the rung element may be arranged at the free ends of the legs of the U shape, while the sleeve may be designed to be arranged on the upper side of the U shape and thus on the interconnecting part of the U shape. Such a design may allow the wedge of the sleeve to push the notch(es) of the rung element into engagement with the border of the cut out in the bridge part.

In a further embodiment the pair of edges on the bridge part are arranged on an opposite side of the pair of flange portions.

This may further improve a snug engagement between the U-shaped slidable fitting adapter and the C-shaped guide channel.

The U-shaped slidable fitting adapter may be inserted into the C-shaped guide channel so that the openings of the U-shaped slidable fitting adapter and the C-guide channel face one another. This will lead to a very snug engagement of the U-shaped slidable fitting adapter in the C-shaped guide channel since the partially encompassing parts can extend into abutment with the edges on an outer side of the bridge part.

The edges may thus be located on a side of the bridge part that is opposite the opening of the U-shaped slidable fitting adapter.

In a further embodiment, any corners of the C-shaped guide channel and/or the U-shaped slidable fitting adapter are formed radiused and rounded off.

This may increase stability and durability since any sharp corner will result in comparably high material tension upon applying a force on the modular cable rack and support system, which can therewith lead to material failure.

In still another embodiment an outer dimension of the U-shaped slidable fitting adapter corresponds to an inner dimension of the C-shaped guide channel for a snug form fit engagement of the U-shaped slidable fitting adapter in the C-shaped guide channel.

In a further embodiment an opening of the C-shaped guide channel and an opening of the U-shaped slidable fitting adapter are designed to face one another when the U-shaped slidable fitting adapter is arranged slidably within the C-shaped guide channel.

Arranging and positioning the U-shaped slidable fitting adapter in the above-described manner facilitates the mounting of various devices, cable holders, cable clamps or other fittings onto the bridge part of the U-shaped slidable fitting adapter. Further, it also reduces or completely removes the influence or any disturbances of mounting elements such as screws or bolts that are used to connect the C-shaped guide channel to another structure or wall via the intermediate part.

In another embodiment inner radii of corners of the C-shaped guide channel may correspond to outer radii of the corners and free ends of the U-shaped slidable fitting adapter.

In particular the free ends of the U-shaped slidable fitting adapter and therewith the free ends of the pair of flange portions may have a radii that corresponds to the inner radii of the corners between the intermediate part and the pair of extensions of the C-shaped guide channel. Such radii may be in the same ranges as specified above and be in the range of R4 to R12, preferably R6 to R10 and more preferably R7 to R9.

It is to be noted that R4 may refer to radius of 4mm, R5 may refer to a radius of 5mm, R6 may refer to a radius of 6mm and so on.

In another embodiment the C-shaped guide channel may not be interrupted or show any irregularity along its length.

The embodiments of the invention have now been briefly mentioned and described. More details are now provided by referring to the figure description and therewith also the figures.

### Brief Description of the Drawings

The present invention will now be described, for exemplary purposes, in more detail by way of an embodiment(s) and with reference to the enclosed drawings, in which:
- Fig. 1: schematically illustrates a C-shaped guide channel and a U-shaped slidable fitting adapter arranged within the C-shaped guide channel;
- Fig. 2: schematically illustrates a similar view as figure 1 but in this view the C-shaped guide channel and the U-shaped slidable fitting adapter are illustrated disengaged;
- Fig. 3: schematically illustrates an orthogonal front side view of figure 1 along arrow III of figure 1;
- Fig. 4: schematically illustrates the U-shaped slidable fitting adapter positioned within the C-shaped guide channel, whereby a cable clip is mounted on the U-shaped slidable fitting adapter;
- Fig. 5: schematically illustrates a similar view as figure 4 but the U-shaped slidable fitting adapter being fixedly connected to the C-shaped guide channel;
- Fig. 6: schematically illustrates an orthogonal front side view of an embodiment similar to the one in figure 5 but with the cable clip oriented differently, along arrow VI of figure 5;
- Fig. 7: schematically illustrates an exploded view of another embodiment of the invention;
- Fig. 8: schematically illustrates an assembled view of the embodiment of figure 7;
- Fig. 9: schematically illustrates a rung element mounted in a pair of C-shaped guide channels;
- Fig. 10: schematically illustrates a cross sectional view of figure 9 cut at the position of the arrows X - X, and
- Fig. 11: schematically illustrates a similar view as figure 9 but with the rung elements fixedly connected to the pair of C-shaped guide channels via the U-shaped slidable fitting adapter.

### Detailed Description

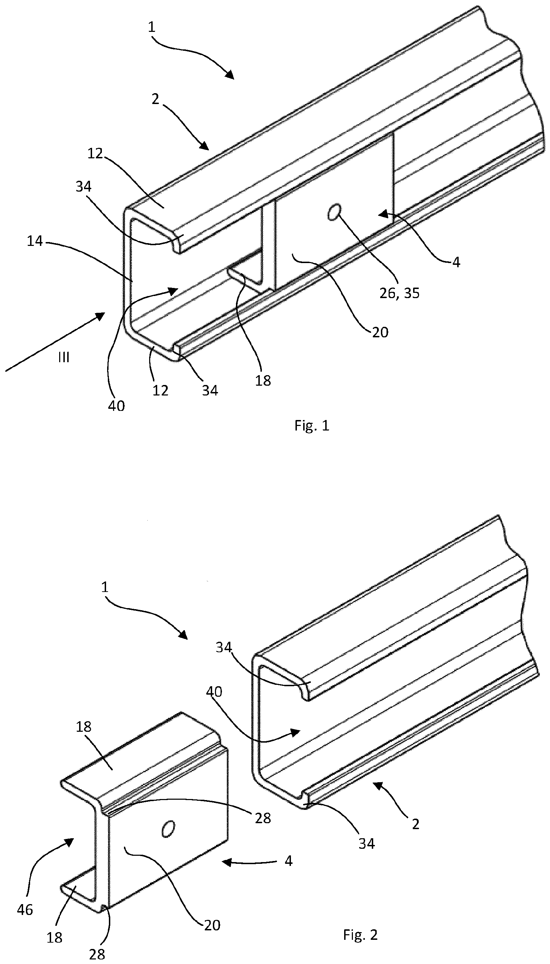

Figure 1 illustrates a modular cable rack and support system 1 comprising a C-shaped guide channel 2 cut off at one end for illustrate purposes and a U-shaped slidable fitting adapter 4 positioned within the C-shaped guide channel 2. The C-shaped guide channel 2 comprises a pair of extensions 12 that are interconnected by an intermediate part 14. The pair of extensions 12 extend into the same direction away from the intermediate part 14 and both the pair of extensions 12 and the intermediate part 14 extend along a longitudinal direction of the C-shaped guide channel 2. At free ends of the pair of extensions 12, each of the pair of extensions 12 comprise a partially encompassing part 34 that is designed to at least partially encompass or hug the U-shaped slidable fitting adapter 4 in order to keep it snug in place. The intermediate part 14, the pair of extensions 12 and the partially encompassing part 34 therewith form a C-shape design to hold and encompass the U-shaped slidable fitting adapter 4. The C-shaped guide channel 4 further defines an opening 40 through which a bridge part 20 of the U-shaped slidable fitting adapter 4 may be accessed.

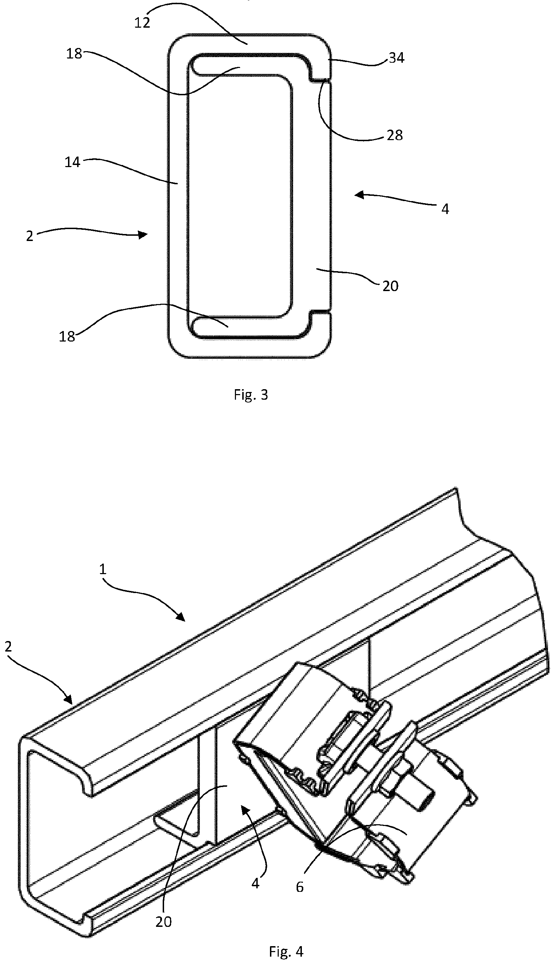

The U-shaped slidable fitting adapter 4 comprises a pair of flange portions 18, which both are extending in the same directions away from the bridge part 20, which bridge part 20 is interconnecting the pair of flange portions 18. The bridge part 20 and the pair of flange portions 18 together form a U-shape. The bridge part 20 further comprises a mounting mechanism 26 or at least a part of it, in the form of a screw hole 35 for receiving a screw for example of a cable clip as illustrated in figures 4 to 6. Other types of mounting mechanism 26 will be described herein referring to other embodiments.

Turning now to figure 2, which illustrates a similar view as figure 1 and illustrates a modular cable rack and support system 1 but this time the U-shaped slidable fitting adapter 4 is disengaged from the C-shaped guide channel 2. From figure 2 it can be seen that an outer dimension of the U-shaped slidable fitting adapter 4 fits very snug into an inner dimension of the C-shaped guide channel 2. The U-shaped slidable fitting adapter 4 further comprises a pair of edges 28 on the bridge part 20. The pair of edges 28 are formed on a side of the bridge part 20 that is facing away from the pair of flange portions 18. The pair of edges 28 are formed by milling or cutting or the like and by providing the bridge part 20 with a higher thickness, about two times the thickness of the pair of flange portions 18. The U-shaped slidable fitting adapter 4 also defines an opening 46. The opening 46 of the U-shaped slidable fitting adapter 4 faces the opening 40 of the C-shaped guide channel 2 once the U-shaped slidable fitting adapter 4 is inserted and positioned in the C-shaped guide channel 2. The pair of edges 28 are designed and positioned so that the at partially encompassing parts 34 of the C-shaped guide channel 2 abut the edges 28 when the U-shaped slidable fitting adapter 4 is inserted in the C-shaped guide channel 2.

The terms inner and outer dimensions refer to shapes that match one another like a piece of a puzzle. In this disclosure this means that the inner dimension fits snug into the outer dimension.

It is to be noted that the U-shaped slidable fitting adapter 4 can only be inserted into the C-shaped guide channel 2 from the front side or the back side. It is not possible to insert the U-shaped slidable fitting adapter 4 from the side.

Figure 3 illustrates an orthogonal front side view along arrow III of figure 1, showing well how the U-shaped slidable fitting adapter 4 is snug positioned in the C-shaped guide channel 2. The at least partially encompassing parts 34 snugly hug the U-shaped slidable fitting adapter 4 into the C-shaped channel 2 by abutting edges 28 of the bridge part 20. The abutment between the pair of edges 28 and the pair of at least partially encompassing extensions 34 provides for a very tight and snug form fit and therewith a very stable and resistance engagement while still allowing the U-shaped slidable fitting adapter to slide in the C-shaped guide channel 2. Figure 3 further illustrates well how an outer radius of the corner(s) between the flange portions 18 and the bridge part 20 match an inner radius of the corner between partially encompassing parts 34. In addition, the free ends of the pair of flange portions 18 are rounded preferably with a radius that corresponds to the inner radius between the intermediate part 14 and the pair of extensions 12. The outer corners of the C-shaped guide channel 2 are also rounded off.

All radii as explained and identified previously, correspond to one another and may be in the range of R4 to R12, preferably R6 to R10.

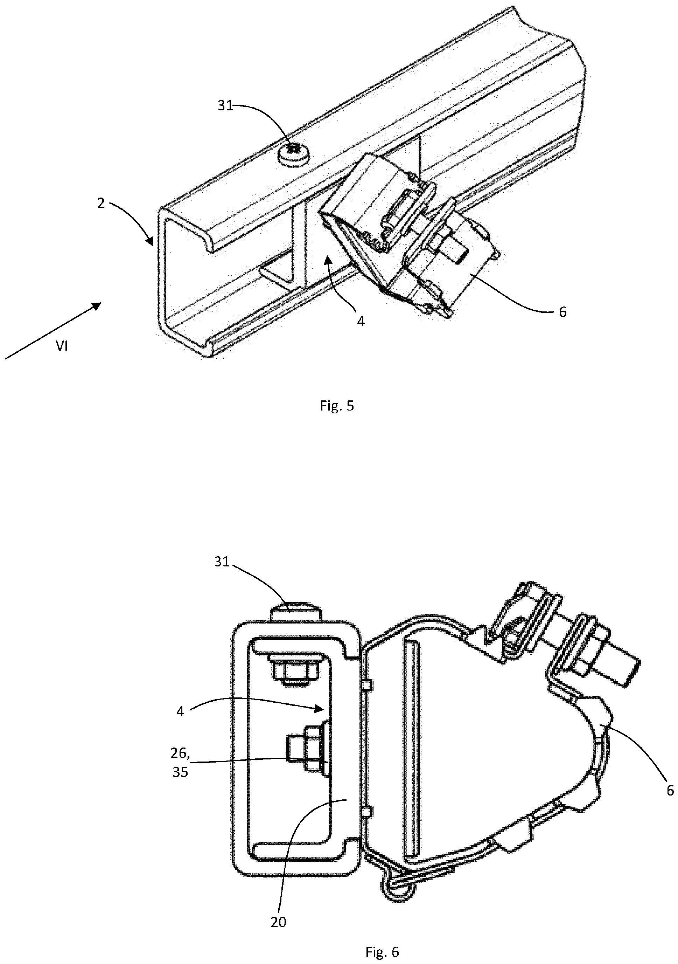

Figures 4 to 6 illustrate how a cable clip 6 is mounted to the U-shaped slidable fitting adapter 4 using the mounting mechanism 26 (c.f. figure 6) provided on the bridge part 20. Figures 4 to 6 illustrate well how the distance between adjacent U-shaped slidable fitting adapters 4 and therewith cable clips can be adjusted directly on the installation site and depending on the requirements and specification. Once the intervals between adjacent U-shaped slidable fitting adapters 4 are set and the cables or other installations are placed in position the U-shaped slidable fitting adapters 4 may be longitudinally fixed using screws 31 as illustrated in figures 5 and 6.

Figure 6 illustrates an orthogonal front side view along arrow VI of figure 5 but with the cable clip 6 vertically oriented. Figure 6 illustrates well how the cable clip 6 is mounted to the bridge part 20 of the U-shaped slidable fitting adapter 4 via the mounting mechanism 26 in the form of the screw hole 35.

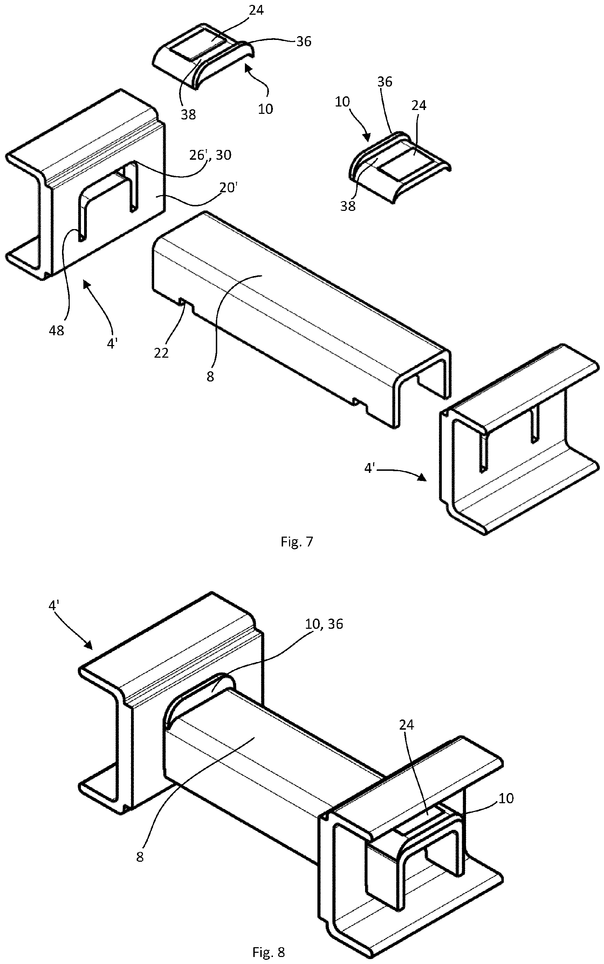

Figure 7 illustrates an exploded view of a part of a modular cable rack and support system 1 comprising another type of U-shaped slidable fitting adapter 4' having a different type of mounting mechanism 26' in the form of a cut out 30. The cut out 30 is arranged in a bridge part 20' of the U-shaped slidable fitting adapter 4'. Besides these differences the U-shaped slidable fitting adapter 4' is designed in a similar manner as previously explained. The cut out 30 is designed to snuggly receive a profile of a rung element 8 in order to produce a cable ladder. The rung element 8 has a U-shaped profile that is oriented upside down and it comprises notches 22 in the leg-parts of the U-shaped profile. The notches 22 can engage in a border or edge 48 of the cut out 30. The modular cable rack and support system 1 further comprises a sleeve 10. The sleeve 10 has also a U-shaped profile and is designed to fit in between the border of the cut out 30 and the rung element 8 once the rung element 8 is inserted into the cut out 30.

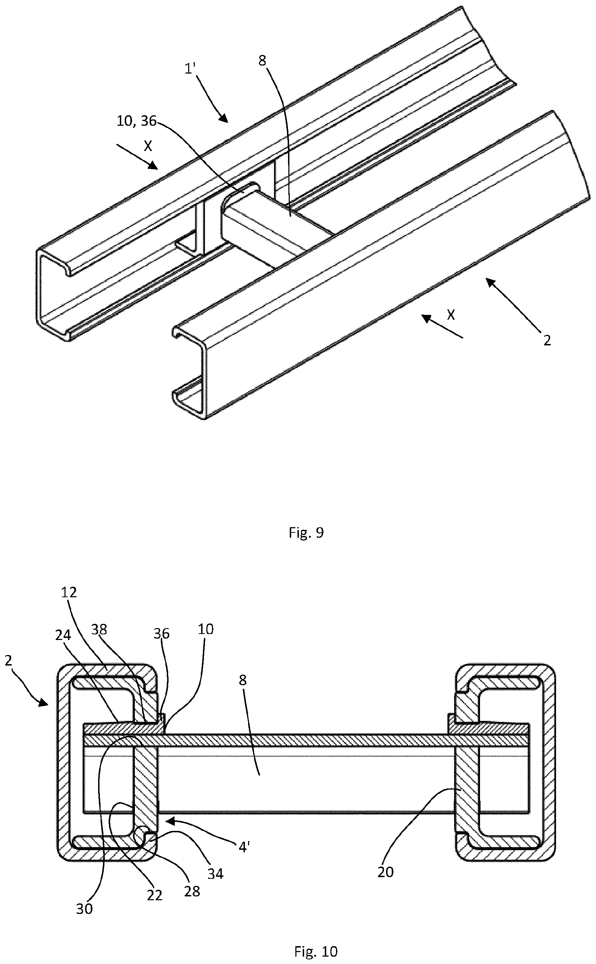

Still referring to figure 7 the sleeve 10 further comprises a wedge 24, a groove 38 and a flange 36. During insertion of the sleeve 10 into the cut out 30 together with one end of the rung element 8, the wedge 24 goes in first thereby pressing the rung element 8 towards a lower part of the cut out 30 and once the notches 22 of the rung element 8 engage the border of the cut out 30, then the groove 38 engages an upper part of the border of the cut out 30 while the flange 36 prevents the sleeve 10 from sliding deeper into the cut out 30 as illustrated in figure 8. This way the rung element 8 is safely and securely locked in the U-shaped slidable fitting adapters 4' and therewith the pair of C-shaped guide channels 2 (c.f. figure 9).

The assembled version of figure 7 is illustrated in figure 8 in which the rung element 8 is securely locked into a pair of U-shaped slidable fitting adapters 4' with both its free ends.

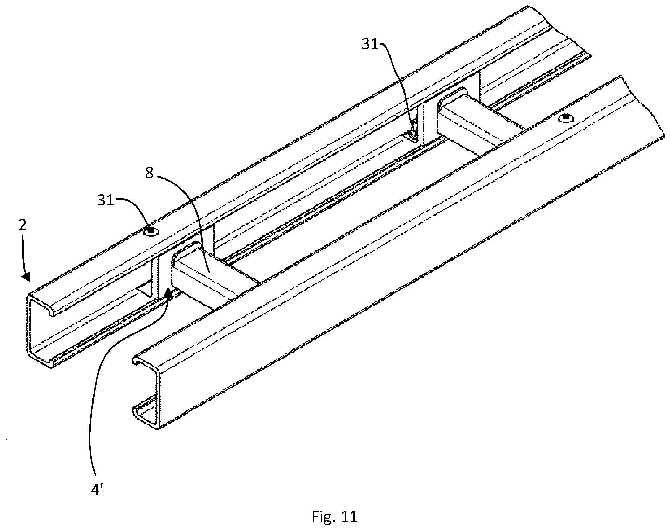

Figure 9 finally illustrates the assembled modular cable rack and support system 1' comprising the cable ladder. For illustrates purposes only one rung element 8 is shown. A flange 36 of the sleeve 10 is also well visible. In figure 9 the assembly of figure 8 is engaged and positioned within the C-shaped guide channel 2. The U-shaped slidable fitting adapters 4' are not yet fixed along a longitudinal direction with screws 31 or the like. A longitudinal fixation of the U-shaped slidable fitting adapters 2 using screws is shown in figure 11.

Figure 10 shows a cross-sectional view cut through line X-X of figure 9, perpendicular to a longitudinal direction defined by the C-shaped guide channels 2. The cross sectional view of figure 9 further illustrates how the sleeve 10 locks the rung element 8 in the U-shaped slidable fitting adapters 4'. As the cross section cuts right through the sleeve 10 the flange 36, the groove 38 and the wedge 24 engaged in the cut out 30 of the U-shaped slidable fitting adapter 4' are well visible. The sleeve 10 presses the notches 22 of the rung element 8 into engagement with the border of the cut out 30, thereby safely locking the rung element 8 in the U-shaped fitting adapter 4'. Figure 10 further illustrates how the partially encompassing parts 34 of the extensions 12 of the C-shaped guide channel 2 abut the pair of edges 28 formed on the bridge part 20. Basically figure 10 also illustrates how outer dimensions of the U-shaped slidable fitting adapter 4' smoothly match inner dimensions of the C-shaped guide channel 2 so that a strong and snug fit between the two components can be achieved.

Although not shown in the figures, cable clips 6 (c.f. figures 4 to 6) can also be connected to the rung element 8 for snug and neat guiding of cables or electric lines. The snug fit thereby helps to improve safety during short circuits and to keep neat order with cables. It is further within the scope of the skilled person to understand that a cable ladder may comprise a plurality of rung elements 8 arranged at intervals along a longitudinal direction of a pair of C-shaped guide channels 2.

Finally figure 11 illustrates a pair of C-shaped guide channels 2 and two rung elements 8 arranged and fixedly positioned within the C-shaped pair of guide channels 2 using the U-shaped slidable fitting adapters 4'. At least one of each pair of U-shaped slidable fitting adapters 4' is longitudinally fixed to the C-shaped guide channel 2 using a screw 31 or bolt (not shown). The embodiment illustrated in figure 11 may receive a plurality of cables on the rung elements 8, which cables may be held using cable clips 6 (c.f. figure 4) or any other type of cable holding device. The screws 31 or bolts may be screwed into the C-shaped guide channels 2 and the U-shaped slidable fitting adapter 4' alternatingly from a top and a bottom along one of the pair of C-shaped guide channels 2 and also alternatingly but opposite on the other of the pair of C-shaped guide channels 2. This is illustrated in figure 11.

The invention has now been described according to the figures. All embodiments shown herein may be combined and used in a modular way with the cable ladder system 1, 1'. The skilled person understands that the scope of the invention includes all possible and potential combinations illustrated in the figures or described herein.

## Claims

1. A modular cable rack and support system comprising a C-shaped guide channel (2) and a U-shaped slidable fitting adapter (4, 4') comprising a mounting mechanism (26, 26'), the U-shaped slidable fitting adapter (4, 4') being designed to enter and slide in the C-shaped guide channel (2), the C-shaped guide channel (2) comprising an intermediate part (14) extending along a length of the C-shaped guide channel (2) and a pair of extensions (12) interconnected by the intermediate part (14), said pair of extensions (12) being arranged to extend in the same direction on longitudinal sides of the intermediate part (14), the pair of extensions (12) also extending along the length of the C-shaped guide channel (2), whereby the pair of extensions (12) each comprise a partially encompassing part (34) at their respective free ends, the U-shaped slidable fitting adapter (4, 4') comprising a pair of flange portions (18) and a bridge part (20, 20'), wherein the pair of flange portions (18) are arranged to extend in the same direction on two opposite sides of the bridge part (20, 20'), wherein the partially encompassing parts (34) have an inner radius, which corresponds to an outer radius of corners between the pair of flange portions (18) and the bridge part (20, 20'), wherein the bridge part (20, 20') further comprises a pair of edges (28) arranged opposite one another so that the partially encompassing parts (34) abut the pair of edges (28) when the U-shaped slidable fitting adapter (4, 4') is positioned in the C-shaped guide channel (2).

2. The modular cable rack and support system according to claim 1, wherein the C-shaped guide channel (2) and the U-shaped slidable fitting adapter (4, 4') each are integrally formed and/or made of fibre-reinforced plastic.

3. The modular cable rack and support system according to claim 1 or 2 wherein the inner radius of the partially encompassing part(s) (34) and the outer radius of corners between the pair of flange portions (18) and the bridge part (20, 20') are in the range of R4 to R12, preferably R6 to R10 and more preferably R7 to R9.

4. The modular cable rack and support system according to any of the previous claims, wherein the mounting mechanism (26, 26') is arranged at the bridge part (20, 20') and wherein the mounting mechanism (26, 26') is any of a cut out (30), a rotatable locking mechanism or a hole (35) with a thread for receiving a screw.

5. The modular cable rack and support system according to any of the previous claims further comprising a rung element (8) having a notch (22), wherein the mounting mechanism (26') is a cut out (30) arranged in the bridge part (26') and wherein the rung element (8) is designed to fit into the cut out (30) and wherein the notch (22) is designed to engage with a border of the cut out (30) when the rung element (8) is inserted into the cut out (30).

6. The modular cable rack and support system according to claim 5, further comprising a sleeve (10) at least partially encompassing the rung element (8), wherein the sleeve (10) comprises a wedge (24) that is designed to be pushed in between at least a part of the cut out (30) and the rung element (8) for clamping and eventually locking the rung element (8) in the cut out (30).

7. The modular cable rack and support system according to claim 6, wherein the sleeve (10) further comprises a flange (36) and a groove (38), the groove (38) being arranged between the wedge (24) and the flange (36) so that upon pushing the sleeve (10) into the cut out (30) with the wedge (24) first, the groove (38) engages the border of the cut out (30) once the wedge (24) is pushed all the way into the cut out (24) and wherein the flange (36) prevents the sleeve (10) from entering deeper into the cut out (30) once the groove (38) engages the border.

8. The modular cable rack and support system according to any of claims 5 to 7, wherein the rung element (8) is U-shaped and wherein the cut out (30) is formed correspondingly so that the rung element (8) snuggly fits into the cut out.

9. The modular cable rack and support system according to any of the previous claims, wherein the pair of edges (28) on the bridge part (20, 20') are arranged on an opposite side of the pair of flange portions.

10. The modular cable rack and support system according to any of the previous claims, wherein corners of the C-shaped guide channel (2) and the U-shaped slidable fitting adapter (4, 4') are formed radiused and rounded off.

11. The modular cable rack and support system according to any of the previous claims, wherein an outer dimension of the U-shaped slidable fitting adapter (4, 4') corresponds to an inner dimension of the C-shaped guide channel (2, 2') for a snug form fit engagement of the U-shaped slidable fitting adapter (4, 4') in the C-shaped guide channel (2).

12. The modular cable rack and support system according to any of the previous claims, wherein an opening (40) of the C-shaped guide channel (2) and an opening (46) of the U-shaped slidable fitting adapter (4, 4') are designed to face one another when the U-shaped slidable fitting adapter (4, 4') is arranged within the C-shaped guide channel (2).

13. The modular cable rack and support system according to any of the previous claims, wherein inner radii of corners of the C-shaped guide channel (2) correspond to outer radii of the corners and free ends of the U-shaped slidable fitting adapter (4, 4').
